# EUROPÄISCHE PATENTANMELDUNG

(11) **EP 0 700 881 A1**
(43) Veröffentlichungstag der Anmeldung: **13.03.1996**
(21) Anmeldenummer: 95113491.5
(22) Anmeldetag: 28.08.1995
(51) Int. Cl.: C04B 35/634, C04B 35/111

(54) **Bindemittel für keramische Massen, thermisch verarbeitbare Masse sowie Verfahren zur Herstellung von anorganischen Sinterformteilen**

(30) Priorität: 08.09.1994 DE 4431962
(71) Anmelder: BAYER AG, D-51368 Leverkusen (DE)
(72) Erfinder: Timmermann, Ralf, Dr., D-47800 Krefeld (DE); Mazanek, Jan, Dr., D-51061 Köln (DE); von Gizycki, Ulrich, Dr., D-51379 Leverkusen (DE); Dujardin, Ralf, Dr., D-47877 Willich-Anrath (DE)

(57) **Zusammenfassung**

Die vorliegende Erfindung betrifft ein Bindemittel für keramische Massen, eine thermisch verarbeitbare Masse, bestehend aus mindestens einem sinterfähigen Pulver und mindestens einem thermoplastischen Bindemittel sowie ein Verfahren zur Herstellung von anorganischen Sinterformteilen.

## Beschreibung

Die vorliegende Erfindung betrifft ein Bindemittel für keramische Massen, eine thermisch verarbeitbare Masse, bestehend aus mindestens einem sinterfähigen Pulver und mindestens einem thermoplastischen Bindemittel sowie ein Verfahren zur Herstellung von anorganischen Sinterformteilen.

Thermoplastische Formmassen finden unter anderem Anwendung bei Verfahren wie Spritzgießen, Extrudieren oder Warmpressen, bei denen ein temperaturabhängiges Fließverhalten notwendig ist.

Es ist bekannt, Formteile aus anorganischen Materialien dadurch herzustellen, daß man ein Keramikpulver oder ein Metallpulver mit einem thermoplastischen Harz vermischt, die Mischung zu einem sogenannten grünen Formteil verformt, das thermoplastische Harz entfernt und anschließend diesen abgemagerten Grünling vor oder auch nach seiner Sinterung zu seiner im wesentlichen endgültigen Gestalt bearbeitet (F. Aldinger und H.-J. Kalz Angew. Chem. 99 (1987) 381-391; M.J. Edirisinghe, J.R.G. Evans Inter. J. High Technology Ceramics 2 (1986) 1-31. Als thermoplastisches Harz bzw. Bindemittel werden rein organische Verbindungen wie z.B. Polystyrol, Polypropylen, Polyethylen und andere Polymere eingesetzt. Ebenfalls bekannt sind Kombinationen verschiedener Polymere auch mit Zusatz von Gleit- oder Schmiermitteln.

Die Bindemittel werden dabei aus dem Grünling z.B. durch Erhitzen auf Temperaturen von 200 bis 600 °C während einer Zeitspanne von 3-100 Stunden entfernt, unter thermischer Spaltung der Bindemittel. Es muß sehr vorsichtig und langsam auf diese Temperaturen erhitzt werden, damit der Grünling nicht durch unkontrollierten Zerfall der organischen Substanz geschädigt wird. Aus diesem Grunde soll gemäß der DE-A 2 409 942 die Aufheiztemperatur nur 4 °C/Stunde betragen. In der US-A 4 671 912 werden sogar noch niedrigere Aufheizgeschwindigkeiten von 1 bis 2 °C/Stunde, zumindestens solange, bis die Hälfte des Bindemittels entfernt ist, empfohlen. Diese langen Ausheizperioden von mehreren Tagen vermindern die Wirtschaftlichkeit dieser Verfahren stark.

Es sind daher Bindersysteme entwickelt worden, welche auf modifizierten Polyacetalen basieren und welche durch katalytische Zersetzung mittels gasförmiger Säuren bei erhöhten Temperaturen, aber unterhalb des Erweichungspunktes, entfernt werden können. Ein solches aus der EP-A 413 231 bekanntes Bindersystem hat aber den Nachteil, daß durch den Einsatz an Säuren starke Korrosionen an Öfen und Metallpulvern auftreten. Zudem können die beim Austreiben entstehenden Produkte toxisch sein.

Zur Beschleunigung des Austreibens des Bindemittels wird in der EP-A 115 104 empfohlen, als Bindemittel ein Gemisch aus einem oxidierten Paraffinwachs oder einem oxidierten mikrokristallinen Wachs mit einer höheren Fettsäure einzusetzen. Derartige Bindersysteme zeigen aber eine nicht zufriedenstellende Haftung auf dem Pulver, wodurch es immer wieder zu Entmischungserscheinungen während des Spritzgußvorganges kommt. Häufig kommt es aufgrund der zu niedrigen Erweichungspunkte dieser Bindersysteme zu leichten Verformungen der Spritzkörper während der Binderaustreibung.

Die DE-A 4 136 615 offenbart Bindersysteme auf Basis eines Thermoplasten aus der Gruppe Polyamid, Polyester, Poly(meth)acrylat bzw. Polyurethan unter Zusatz von mehrfunktionellen Epoxiden sowie Gleitmitteln. Diese Mischung hat aber den Nachteil, daß Abfälle nicht oder nur sehr schlecht wieder verwertet werden können. Damit stellt sich vor allem bei hochpreisigen Keramik- und Metallpulvern die Frage der Wirtschaftlichkeit.

Sublimierbare Bestandteile, wie z.B. Naphtalin oder leicht verdampfbare, wie z.B. Phtalate und andere niedermolekulare Ester Bestandteile des Bindersystems zeigen das Problem, daß bereits bei der Herstellung der Mischungen unter dem Einfluß der hohen Temperaturen Teile des Bindersystems abdampfen. Man hat große Probleme bei der Reproduzierbarkeit dieser Mischungen. Dies führt in weiterer Konsequenz zu wechselndem Ausheizverhalten der Probekörper. Man bekommt eine erhöhte Ausschußquote.

Aufgabe der vorliegenden Erfindung ist es, Bindersysteme bereitzustellen, die drastisch verkürzte Austriebzeiten zulassen, ohne Verformung oder Rißbildung am Grünling befürchten müssen. Zudem sollen die Bindersysteme so aufeinander optimiert sein, daß insgesamt eine gute Pulverhaftung gewährleistet ist und Entmischungen nahezu ausgeschlossen sind.

Diese Anforderungen werden erfüllt durch ein Bindemittel für keramische Massen, welches aus Polyamid und mindestens einem Styrol-Copolymer sowie zusätzlich einer Kombination von niedermolekularen Fließ- bzw. Trennhilfsmitteln sowie gegebenenfalls weiteren Hilfsstoffen besteht.

Bevorzugt beträgt der Anteil des oder der Polystyrolcopolymeren zwischen 30 und 70 Gew.-%, der des Polyamids zwischen 10 und 40 Gew.-% sowie der Anteil der Fließ- und Trennhilfsmittel sowie gegebenenfalls weiterer Hilfsstoffe zwischen 10 und 30 Gew.-% beträgt.

Besonders bevorzugt besteht das Styrolcopolymer aus 65 bis 59 mol-% Styrol und 5 bis 35 mol-% Comonomer, bevorzugt 80 bis 90 mol-% Styrol und 10 bis 20 mol-% Comonomer.

Besonders geeignete Polyamide im Sinne der vorliegenden Erfindung sind alle aliphatischen oder cycloaliphatischen Polyamide sowie alle aliphatisch/cycloaliphatisch, aliphatisch/aromatischen und cycloaliphatischen/aromatischen Polyamide oder Copolyamide. Solche Polyamide sind z.B. Polyamide, die aus Aminocarbonsäuren mit 4-12 Kohlenstoffatomen, z.B. ε-Caprolactam, ώ-Aminoundecansäure, ώ-Aminododecansäure oder entsprechende Lactame nach üblichen Verfahren der Polykondensation oder Polymerisation hergestellt werden. Ferner kommen solche Polyamide in Betracht, die durch Polykondensation aliphatischer oder cycloaliphatischer Diamine mit aliphatischen, cycloaliphatischen oder aromatischen Dicarbonsäuren erhalten werden.

Derartige Diamine sind beispielsweise Ethylendiamin, Tetramethylendiamin, Hexamethylendiamin, Decamethylendiamin, Dodecamethylendiamin, 2,2,4-Trimethylhexamethylendiamin, 1,4-Diaminomethyl-cyclohexan, 4,4'-Diamino-dicyclohexylmethan, 3,3'-Dimethyl-4,4'-Diamino-dicyclohexylmethan und Isophorondiamin. Beispiele für Dicarbonsäuren sind Oxalsäure, Adipinsäure, Azelainsäure, Decandicarbonsäure, Hexandicarbonsäure, 2,4,4- und 2,2,4-Trimethyladipinsäure, Isophthalsäure und Terephthalsäure.

Copolyamide im Sinne der vorliegenden Erfindung sind solche Polyamide, die durch Copolymerisation oder durch Copolykondensation mehrerer der vorstehend genannten Aminocarbonsäuren, deren Lactamen, Diaminen und Dicarbonsäuren hergestellt werden können. Polyamid-6 ist besonders bevorzugt. (Ullmann's Encyclopedia od Industrial Chemistry Vol. A21, p. 179,5 compl. rev. ed. 1992, Verlag Chemie Weinheim, Basel, Cambridge, New York).

Besonders geeignete modifizierte Polystyrole sind z.B. Copolymere von Styrol mit Acrylaten bzw. Säureanhydriden (bzw. nach deren nachträgliche Modifizierung zu Imiden). Das Comonomer zum Styrol kann 0,1-45 Gew.-% eines primären, sekundären oder tertiären C₁-C₁₂-Alkylesters der Acrylsäure oder Methacrylsäure oder Mischungen derartiger Ester bzw. ein epoxygruppenhaltiger Ester der Acryl- bzw. Methacrylsäure bzw. einer olefinisch ungesättigten Mono- oder Dicarbonsäure, die auch teilweise oder vollständig als Salz vorliegen kann und/oder einem funktionellen Derivat einer solche Säure sein.

Bevorzugtes Comonomer zum Styrol ist Acrylsäure-n-Butylester.

Diese Compolymere werden nach den gängigen und bekannten Methoden hergestellt. (Ullmann's Encyclopedia od Industrial Chemistry Vol. A21, p. 615, 5. compl. rev. ed. 1992, Verlag Chemie Weinheim, Basel, Cambridge, New York).

Im Sinne der Erfindung haben diese Polymeren vorzugsweise ein Molekulargewicht im Bereich von 5 000 bis 1 000 000, vorzugsweise von 10 000 bis 30 000 bei den Polyamiden und 20 000 bis 200 000 bei den Polystyrolcopolymeren.

Die Molekulargewichtsverteilungen der Polystyrolcopolymeren kann aufgrund der Synthese (Emulsions- bzw. Suspensionspolymerisation) sowohl mono- als auch bimodal sein.

Als zusätzliche Komponente(n) enthält die Bindermischung ein oder mehrere Fließhilfsmittel bzw. Trennhilfsmittel, die eine Erniedrigung der Viskosität der Formmasse bei der Formgebung sowie eine saubere und einfache Entformung gewährleisten. Beispiele sind aliphatische Fettsäuren und deren Salze und Folgeprodukte, wie Stearinsäure, Calciumstearat, Magnesiumstearat, Stearinalkohol, Stearinsäureamide wie Ethylendistearylamid, Stearinsäurealkylester, Öle wie Polydimethylsiloxan, Polyethylenoxide, Polypropylenoxide bzw. Copolymere aus Polydimethylsiloxan und Polyethylenoxid oder Polypropylenoxid und dergleichen oder niedermolekulare Wachse wie Paraffinwachs, Polyethylenoxidwachs oder Bienenwachs. Bevorzugt sind Formmassen, die 0,1 bis 10 Gew.-% (bezogen auf die Gesamtmasse Stearinsäure, deren Salze und Folgeprodukte enthalten. Im allgemeinen wird nur so viel Fließhilfsmittel zugegeben, wie notwendig ist, um die Viskosität bei der Formgebung in den gewünschten Bereich zu bringen.

Besonders bevorzugt ist das Fließ- bzw. Trennmittel ein Salz einer Fettsäure, besonders bevorzugt ein Magnesiumsalz, weiterhin ein Distearylamid des Ethylendiamins.

Gegenstand dieser Erfindung ist auch eine thermoplastisch verarbeitbare Masse, bestehend aus mindestens einem sinterfähigen Pulver und mindestens einem erfindungsgemäßen thermoplastischen Bindemittel.

Die erfindungsgemäßen thermoplastischen Formmassen enthalten mindestens so viel organische Polymere und andere Hilfsstoffe, wie notwendig ist, um eine thermoplastisch verarbeitbare Masse zu erhalten. In der Regel müssen Bindemittel zusammen mit den anderen Hilfsstoffen mindestens das freie Volumen zwischen den Pulverpartikeln im Formteil ausfüllen. Je nach Pulverart sowie deren Kornform und Korngrößenverteilung sind dafür unterschiedliche Mengen notwendig.

Bevorzugt bestehen die erfindungsgemäßen Formmassen aus 75 bis 90 Gew.-%, bevorzugt 80 bis 88 Gew.-%, besonders bevorzugt 84 bis 88 Gew.-% eines sinterfähigen Pulvers sowie 10 bis 25 Gew.-%, bevorzugt 12 bis 20 Gew.-%, besonders bevorzugt 12 bis 16 Gew.-%, eines erfindungsgemäßen Bindesmittels.

Sinterfähige Pulver im Sinne dieser Erfindung sind insbesondere ein oxidisches Pulver aus der Gruppe Aluminiumoxid, Zirkonoxid, Siliciumoxid, Yttriumoxid, Lanthanoxid, Seltenerdoxid, Titandioxid, Chromoxid oder ein nicht oxidisches Pulver aus der Gruppe Siliciumcarbid, Siliciumnitrid, Wolframcarbid, Silicium, Aluminiumnitrid, Bornitrid, Borcarbid, Übergangsmetallcarbide, -nitride, -silicide oder -boride oder ein Metallpulver. Besonders bevorzugt ist das sinterfähige Pulver Aluminiumoxid.

Die erfindungsgemäßen Formmassen sind bei Raumtemperatur fest, jedoch bei Temperaturen oberhalb der Erweichungstemperatur der eingesetzten Polymere thermoplastisch verformbar.

Gegenstand dieser Erfindung ist weiterhin ein Verfahren zur Herstellung von anorganischen Sinterformeilen, wobei
a) eine erfindungsgemäße thermoplastisch verarbeitbare Masse hergestellt wird,
b) eine Formgebung durch Spritzgußverarbeitung erfolgt,
c) ein Ausheizen des Bindersystems aus der spritzgegossenen Form erfolgt,
d) die Formmasse gesintert wird.

Im einzelnen wird bei dem vorliegenden Verfahren so vorgegangen, daß man ein sinterbares anorganisches Pulver mit dem Binder z.B. in Form von Granulaten vermischt. Die anorganischen Pulver weisen bevorzugt mittlere Korngrößen von 0,01 bis 250 µm, bevorzugt 0,1 bis 100 µm, auf. Selbstverständlich können auch Mischungen eingesetzt werden. Die Pulver können auch nach bekannten Verfahren oberflächlich modifiziert sein.

Die Bestandteile der erfindungsgemäßen Spritzgußbindemittel können entweder einzeln oder auch als Mischung zu den Metall- und/oder Keramikpulvern gegeben werden.

In einer besonderen Ausführungsform der Erfindung können eine oder alle Komponenten der Fließ- bzw. Trennhilfsmittel vorher als Beschriftung auf das zu sinternde Pulver aufgebracht werden. Dies kann sowohl in Form einer Lösung der Komponenten bzw. auch durch Aufschmelzen mit nachfolgender Mahlung der Komponenten erfolgen.

Die Herstellung der zu verformenden Massen erfolgt auf übliche Weise in einem Kneter oder Extruder bei Temperaturen von 150 bis 300 °C. Es ist vorteilhaft, beim Mischen hohe Scherkräfte anzuwenden, um Pulveragglomerate zu zerkleinern und dadurch eine homogene Mischung zu erhalten. Falls erwünscht, kann die Masse abkühlen gelassen und anschließend granuliert werden.

Für die Verformung durch Spritzguß können die üblichen Schnecken- und Kolbenspritzgußmaschinen eingesetzt werden und z.B. bei Temperaturen von 150 bis 300 °C und Drucken von 500 bis 20 000 kPa in eine Form, die auf 20 bis 100 °C gehalten wird, verformt werden.

Die entformten Grünlinge werden dann bei Temperaturen zwischen 70 und 500 °C zwecks Entfernung des Bindemittels behandelt. Je nach Zusammensetzung des Bindemittels werden verschiedene Temperaturprogramme durchfahren. Die Entfernung des Bindemittels erfolgt nach einem dem Fachmann geläufigen Verfahren, das heißt, es kann sowohl in einer oxidierenden Atmosphäre wie Sauerstoff; in einer reduzierenden Atmosphäre wie Wasserstoff, in einer inerten Atmosphäre wie Stickstoff oder Argon oder aber auch im Vakuum stattfinden. Es können auch kombinierte Verfahren eingesetzt werden.

Besonders vorteilhaft wird das Bindersystem entfernt und durch Ausheizen mit einem Temperaturanstieg von 5 bis 150 K/Stunde bis auf 500 °C, gefolgt von einem Sinterprozeß bis 2 000 °C.

Die erfindungsgemäßen Formmassen weisen den Vorteil auf; daß durch die Zusammensetzung eine schonende Entfernung des Bindemittels gegeben ist und daher keine Rißbildung zu beobachten ist. Ein weiterer Vorteil ist die, im Vergleich mit dem Stand der Technik, sehr kurze Dauer der Behandlung zur Entfernung des Bindesmittels. Der dritte Vorteil ist die gute Festigkeit des Grünkörpers, die dann ohne Probleme weiterbearbeitet werden können.

Überraschenderweise besitzt dieses Mehrkomponentensystem sehr viel bessere Eigenschaften als die Einzelkomponenten für sich alleine auf. Dieser synergistische Effekt der beiden Hauptbinderkomponenten war auch für den Fachmann nicht vorherzusehen.

Die Erfindung wird durch folgende Beispiele weiter beschrieben, ohne daß hierin eine Einschränkung zu sehen ist.

### Beispiele

### Beispiel 1

85 Gew.-% Aluminiumoxid RS 107 LS der Firma Alcan London, GB, wurden in einem handelsüblichen Zweiwellenextruder (ZSK 32) mit 8 Gew.-% eines Polystyrolcopolymeren (Styrol:n-Butylacrylat 88:12), 4 Gew.-% eines Polyamid 6 (ηᵣₑₗ einer 1 gew.-%igen Lösung in m-Kresol von 2,9), 2 Gew.-% Magnesiumstearat und 1 Gew.-% Ethylendistearylamid intensiv gemischt und zu einem homogenen Granulat verarbeitet.

Dieses Granulat kann auf handelsüblichen Spritzgußmaschinen bei etwa 240 °C verarbeitet werden.

Das Ausheizen der Polymere erfolgte zerstörungsfrei innerhalb von 15 h bei Temperaturen zwischen 200 und 450 °C. Anschließend konnte das Teil problemlos bei Temperaturen bis 1 500 °C gesintert werden.

### Beispiel 2

86 Gew.-% Aluminiumoxid RS 107 LS der Firma Alcan wurden in einem handelsüblichen Zweiwellenextruder (ZSK 32) mit 7,5 Gew.-% eines Polystyrolcopolymeren (Styrol:n-Butylacrylat 86,5:13,5), 3,7 Gew.-% eines Polyamid 6 (ηᵣₑₗ einer 1 gew.-%igen Lösung in m-Kresol von 2,9), 1,9 Gew.-% Magnesiumstearat und 0,9 Gew.-% Ethylendistearylamid intensiv gemischt und zu einem homogenen Granulat verarbeitet.

Dieses Granulat kann auf handelsüblichen Spritzgußmaschinen bei etwa 240 °C verarbeitet werden.

Das Ausheizen der Polymere erfolgte zunächst zerstörungsfrei innerhalb von 12 h bei Temperaturen zwischen 200 und 450 °C. Anschließend konnte das Teil problemlos bei Temperaturen bis 1 500 °C gesintert werden.

### Beispiel 3

88,9 Gew.-% eines mit 1 % Stearinsäure beschichtetem Aluminiumoxid wurden in einem handelsüblichen Zweiwellenextruder (ZSK 32) mit 6,8 Gew.-% eines Polystyrolcopolymeren (Styrol:n-Butylacrylat 85:15), 3,4 Gew.-% eines Polyamid 6 (ηᵣₑₗ einer 1 gew.-%igen Lösung in m-Kresol von 2,9) und 0,9 Gew.-% Ethylendistearylamid intensiv gemischt und zu einem homogenen Granulat verarbeitet.

Dieses Granulat kann auf handelsüblichen Spritzgußmaschinen bei etwa 240 °C verarbeitet werden.

Das Ausheizen der Polymere erfolgte zerstörungsfrei innerhalb von 13 h bei Temperaturen zwischen 200 und 450 °C. Anschließend konnte das Teil problemlos bei Temperaturen bis 1 500 °C gesintert werden.

### Beispiel 4

85 Gew.-% Aluminiumoxid RS 107 LS der Firma Alcan wurden in einem handelsüblichen Zweiwellenextruder (ZSK 32) mit 7 Gew.-% eines Polystyrolcopolymeren (Styrol:n-Butylacrylat 85:15), 5 Gew.-% eines Polyamid 6 (ηᵣₑₗ einer 1 gew.-%igen Lösung in m-Kresol von 2,9) 2 Gew.-% Magnesiumstearat und 1 Gew.-% Ethylendistearylamid intensiv gemischt und zu einem homogenen Granulat verarbeitet.

Dieses Granulat kann auf handelsüblichen Spritzgußmaschinen bei etwa 240 °C verarbeitet werden.

Das Ausheizen der Polymere erfolgte zerstörungsfrei innerhalb von 18 h bei Temperaturen zwischen 200 und 450 °C. Anschließend konnte das Teil problemlos bei Temperaturen bis 1 500 °C gesintert werden.

### Beispiel 5

86 Gew.-% Aluminiumoxid RA 107 LS der Firma Alcan wurden in einem handelsüblichen Zweiwellenexruder (ZSK 32) mit 8 Gew.-% eines Polystyrolcopolymeren (Styrol:n-Butylacrylat 85:15), 5 Gew.-% eines Polyamid 6 (ηᵣₑₗ einer 1 gew.-%igen Lösung in m-Kresol von 3,5) und 1 Gew.-% Ethylendistearylamid intensiv gemischt und zu einem homogenen Granulat verarbeitet.

Dieses Granulat kann auf handelsüblichen Spritzgußmaschinen bei etwa 240 °C verarbeitet werden.

Das Ausheizen der Polymere erfolgte zerstörungsfrei innerhalb von 17 h bei Temperaturen zwischen 200 und 450 °C. Anschließend konnte das Teil problemlos bei Temperaturen bis 1 500 °C gesintert werden.

### Beispiel 6

88,9 Gew.-% eines mit 1 % Stearinsäure gecoatetem Aluminiumoxid wurden in einem handelsüblichen Zweiwellenextruder (ZSK 32) mit 6,8 Gew.-% eines Polystyrolcopolymeren (Styrol:n-Butylacrylat 85:15), 3,4 Gew.-% eines Polyamid 6 (ηᵣₑₗ einer 1 gew.-%igen Lösung in m-Kresol von 3,5) und 0,9 Gew.-% Ethylendistearylamid intensiv gemischt und zu einem homogenen Granulat verarbeitet.

Dieses Granulat kann auf handelsüblichen Spritzgußmaschinen bei etwa 240 °C verarbeitet werden.

Das Ausheizen der Polymere erfolgt zerstörungsfrei innerhalb von 13 h bei Temperaturen zwischen 200 und 450 °C. Anschließend konnte das Teil problemlos bei Temperaturen bis 1 500 °C gesintert werden.

### Vergleichsbeispiel 1

85 Gew.-% Aluminiumoxid RA 107 LS der Firma Alcan wurden in einem handelsüblichen Zweiwellenextruder (ZSK 32) mit 12 Gew.-% eines Polyamid 6 (ηᵣₑₗ einer 1 gew.-%igen Lösung in m-Kresol von 2,9) 2 Gew.-% Magnesiumstearat und 1 Gew.-% Ethylendistearylamid intensiv gemischt und zu einem homogenen Granulat verarbeitet.

Dieses Granulat kann auf handelsüblichen Spritzgußmaschinen bei etwa 250 °C verarbeitet werden.

Das Ausheizen der Polymere konnte nicht zerstörungsfrei durchgeführt werden.

### Vergleichsbeispiel 2

85 Gew.-% Aluminiumoxid RA 107 LS der Firma Alcan wurden in einem handelsüblichen Zweiwellenextruder (ZSK 32) mit 10 Gew.-% eines Polyehylens niederer Dichte LDPE (Low Density Polyethylene) und 5 Gew.-% Paraffinwachs intensiv gemischt und zu einem homogenen Granulat verarbeitet.

Dieses Granulat kann auf handelsüblichen Spritzgußmaschinen bei etwa 200 °C verarbeitet werden.

Das Ausheizen der Polymere erfolgte zerstörungsfrei erst nach 110 h bei Temperaturen zwischen 150 und 450 °C. Anschließend konnte das Teil problemlos bei Temperaturen bis 1 500 °C gesintert werden.

## Patentansprüche

1. Bindemittel für keramische Massen, im wesentlichen dadurch gekennzeichnet, daß er aus Polyamid und mindestens einem Styrol-Copolymer sowie zusätzlich einer Kombination von niedermolekularen Fließ- bzw. Trennhilfsmitteln sowie gegebenenfalls weiterer Hilfsstoffen besteht.

2. Bindemittel gemäß Anspruch 1, dadurch gekennzeichnet, daß der Anteil des oder der Polystyrolcopolymeren zwischen 30 und 70 Gew.-% der des Polyamids zwischen 10 und 40 Gew.-% sowie der Anteil der Fließ- und Trennhilfsmittel sowie gegebenenfalls weiterer Hilfsstoffe zwischen 10 und 30 Gew.-% beträgt.

3. Bindemittel gemäß einem der Ansprüche 1 oder 2, dadurch gekennzeichnet, daß das Styrolcopolymer aus 65 bis 95 mol-% Styrol und 5 bis 35 mol-% Comonomer, bevorzugt 80 bis 90 mol-% Styrol und 10 bis 20 mol-% Comonomer, besteht.

4. Bindemittel gemäß Anspruch 3, dadurch gekennzeichnet, daß das Comonomer zum Styrol 0,1 bis 45 Gew.-% eines primären, sekundären oder tertiären C₁-C₁₂-Alkylesters der Acrylsäure oder Methacrylsäure oder Mischungen derartiger Ester bzw. ein epoxygruppenhaltiger Ester der Acryl- bzw. Methacrylsäure bzw. einer olefinisch ungesättigten Mono- oder Dicarbonsäure ist, die auch teilweise oder vollständig als Salz vorliegen kann und/oder einem funktionellen Derivat einer solchen Säure.

5. Bindemittel gemäß einem der Ansprüche 3 oder 4, dadurch gekennzeichnet, daß das Comonomer zum Styrol Acrylsäure-n-Butylester ist.

6. Bindemittel gemäß einem oder mehreren der Ansprüche 1 bis 5, dadurch gekennzeichnet, daß das Polyamid Polyamid 6 ist.

7. Bindemittel gemäß einem oder mehreren der Ansprüche 1 bis 6, dadurch gekennzeichnet, daß das Fließ- bzw. Trennhilfsmittel ein Salz einer Fettsäure, bevorzugt ein Magnesiumsalz, ist.

8. Bindemittel gemäß einem oder mehreren der Ansprüche 1 bis 6, dadurch gekennzeichnet, daß das Fließ- bzw. Trennhilfsmittel ein Distearylamid des Ethylendiamins ist.

9. Thermoplastisch verarbeitbare Masse, bestehend aus mindestens einem sinterfähigen Pulver und mindestens einem thermoplastischen Bindemittel gemäß einem oder mehreren der Ansprüche 1 bis 8.

10. Thermoplastisch verarbeitbare Masse gemäß Anspruch 9, bestehend aus 75 bis 90 Gew.-%, bevorzugt 80 bis 88 Gew.-%, besonders bevorzugt 84 bis 88 Gew.-% eines sinterfähigen Pulvers sowie 10 bis 25 Gew.-%, bevorzugt 12 bis 20 Gew.-%, besonders bevorzugt 12 bis 16 Gew.-%, eines Bindemittels gemäß einem oder mehreren der Ansprüche 1 bis 8.

11. Thermoplastisch verarbeitbare Masse gemäß einen der Ansprüche 9 oder 10, dadurch gekennzeichnet, daß das sinterfähige Pulver entweder ein oxidisches Pulver aus der Gruppe Aluminiumoxid, Zirkonoxid, Siliciumoxid, Yttriumoxid, Lanthanoxid, Seltenerdoxid, Titandioxid, Chromoxid oder ein nicht oxidisches Pulver aus der Gruppe Siliciumcarbid, Siliciumnitrid, Wolframcarbid, Silicium, Aluminiumnitrid, Bornitird, Borcarbid, Übergangsmetallcarbide, -nitride, -silicide oder -boride oder ein Metallpulver ist.

12. Thermoplastisch verarbeitbare Masse gemäß einem oder mehreren der Ansprüche 9 bis 11, dadurch gekennzeichnet, daß das sinterfähige Pulver Aluminiumoxid ist.

13. Verfahren zur Herstellung von anorganischen Sinterformteilen, dadurch gekennzeichnet, daß
a) eine thermoplastisch verarbeitbare Masse gemäß einem oder mehreren der Ansprüche 9 bis 12 hergestellt wird.
b) eine Formgebung durch Spritzgußverarbeitung erfolgt,
c) ein Ausheizen des Bindersystems aus der spritzgegossenen Form erfolgt,
d) die Formmasse gesintert wird.

14. Verfahren gemäß Anspruch 13, dadurch gekennzeichnet, daß das Bindersystem entfernt wird durch Ausheizen mit einem Temperaturanstieg von 5 bis 150 K/Stunde bis auf 500 °C, gefolgt von einem Sinterprozeß bis 2 000 °C.
